# EUROPEAN PATENT APPLICATION

(11) **EP 3 851 831 A1**
(43) Date of publication of application: **21.07.2021**
(21) Application number: 20152088.9
(22) Date of filing: 16.01.2020
(51) Int. Cl.: G01N 19/04, G01N 35/02, G01N 35/04

(54) **TESTING DEVICE AND METHOD FOR TESTING ADHESIVE TACK**

(71) Applicant: Covestro Intellectual Property GmbH & Co. KG, 51373 Leverkusen (DE)
(72) Inventor: The designation of the inventor has not yet been filed
(74) Representative: Levpat

(57) **Abstract**

A testing device for testing adhesive tack, comprising:
a base;
a first mounting and clamping mechanism comprising a substrate clamp and a lifting unit, wherein the substrate clamp is fixed where the lifting unit is, which fixes and clamps a first substrate and can be lifted in a lengthwise direction along the base at a specified speed by the lifting unit;
a second mounting and clamping mechanism comprising a testing panel and a translating unit that are interconnected, the testing panel clamping and fixing a second substrate, which can be translated in a width direction orthogonal with the lengthwise direction by the translating unit, wherein the testing panel is provided with a plurality of testing points arranged widthwise and alternately in parallel, the second substrate forming, by the testing points, testing surfaces respectively adhered to the first substrate, and wherein the first mounting and clamping mechanism further comprises: a pressure unit arranged on an upper portion of the substrate clamp, the pressure unit exerting a specified pressure when the testing surfaces of the first substrate and the second substrate are adhered to each other; and, a testing mechanism.

## Description

### Technical Field

The present application relates to a testing device and a method for testing adhesive tack.

### Background Art

Adhesives have completely been integrated into all walks of life, and have become an indispensable type of materials for the daily life of people. Adhesives are widely employed in almost all industries, such as manufacturing industry, food industry , pharmaceuticals industry, cigarette industry, domestic appliance industry and daily-use chemical industry, and are generally applied to adhesion of multiple materials like rubber, leather, metal, plastic, glass and ceramic of domains of shoe production, automobile, building and so on.

And, a series of adhesive quality monitoring and testing is required during the production of adhesives, in order to guarantee the production of high-quality adhesives and thereby to lower the rejecting ratio of the adhesives. As regards the testing of adhesive quality, the most importance is to test the tack of an adhesive to determine the strength of cohesion of the adhesive and further determine the quality of the adhesive. Thus, the industry demands a tester to test tack of adhesives urgently.

CN103645134A involves an annular tack tester, comprising a testing bed provided with a Z-axis transmission mechanism that is connected with a mobile crossbeam, the mobile crossbeam being provided at its end part with a force sensor, wherein the force sensor connected at its bottom with a sample clamp, the testing bed is provided at its top end surface with a testing plate clamp that is positioned in a lower portion of the sample clamp for clamping a standard steel plate. The annular tack tester of the invention has a relatively simple structure and can be operated conveniently, which may test the tack value of an adhesive. Moreover, one could choose adhesives with a proper viscosity for the tester according to requirements. However, the characteristic of the tester decides that it cannot carry out testing repeatly directed to the tack of high-crystallized water-borne polyurethane.

US3214971 involves an adhesive tack testing apparatus, comprising a frame structure of the testing apparatus, a transmission mechanism, a testing base with a driving motor and a solenoid valve, a pressure exerting device, a sensor and a force testing head, wherein the transmission mechanism is connected with the frame structure, the testing base with the driving motor and the solenoid valve is connected with the pressure exerting device and the force testing head, and the pressure exerting device, the sensor and the force testing head are connected with a sample clamp, wherein the force testing head can be restored automatically. The apparatus can carry out tack testing for most adhesives or pressure-sensitive tapes. However, testing data cannot be repeated reliably when the apparatus tests the tack of high-crystallized water-borne polyurethane.

CN205483978U discloses an adhesive adhesion force testing assembly for testing adhesion forces of adhesives of all types, which is suitable especially for testing the adhesion force of a frame adhesive in a LCD panel to significantly increase the accuracy and flexibility of adhesion force testing for a frame adhesive, and which can provide data for process monitoring and abnormality analysis of an frame adhesive and improve the production yield of LCD panels with the cost lowered. However, the method is not fit for testing water-borne polyurethane adhesives.

CN2003385647U discloses a adhesion force testing device for testing the bond strength between objects with surfaces in contact, the adhesion force testing device comprising: a testing rack, a fixing module and a pulling force tester, wherein two facing surfaces of objects to be tested are respectively fixed on the testing rack and on the fixing module, and the pulling force tester is connected onto the fixing module. Compared with prior arts, the greatest advantage of this adhesion force testing device disclosed by the utility model lies in: it can measure the value of a pulling force directly by the pulling force tester to calculate the strength of the adhesion force an unit area; it can be produced conveniently at a low cost, and overcomes the defect that pole pieces contain quality difference caused by a tester's subjective judgment.

As is known, the polyurethane material is quite successful as an adhesive material, especially, in shoe production, and either a solvent-based adhesive or a water-borne adhesive mainly enjoys the following properties:
high tack strength and ultimate bond strength;
great thermal endurance, especially with polyisocyanates as a cross-linking agent;
considerable flexibility; and,
the quality easy for wet adhesion processing or thermal activation processing.

Further, a water-borne polyurethane adhesive, in comparison with a solvent-based polyurethane adhesive, owns the following properties:
it is solvent free and environment friendly to provide a safe work and use environment;
it has a low viscosity and will not have a significant difference with a change in polymer molecular weight, thereby making water-borne polyurethane with high molecular weight to increase bond strength and tack strength-in contrast, the viscosity of a solvent-based one will increase in company with the increase in polymer molecular weight with an exponential relationship such that gel would likely be generated when cross linking; and,
its solid content is as high as 50%, while most solvent-based polyurethane adhesives have a solid content of about 20%; the viscosity of a solvent-based one increases sharply with its solid content; in comparison, the formula with water-borne polyurethane can be adjusted more easily;
its adhesion force to substrates, such as PC and ABS is equivalent to that of a solvent-based one; but, its adhesion for non-polar substrates such as PP requires surface processing;
its drying processing is slower than that of a solvent-based one with more considerable energy consumption;
its investment cost is low, with no necessity for solvent retrieval or facilities of fire and blasting protection.

Water-borne polyurethane adhesives can be divided into three major categories according to different application characteristics: wet adhesion, cold adhesion (contacting adhesive) and thermal activation adhesion. Due to high efficiency and sound performance the thermal activation adhesion becomes one employed most widely among water-borne polyurethane adhesives.

The thermal activation adhesion indicates an adhesion mode in which, after an adhesive goes through sizing treatment and is dried, the dry adhesive layer will be heated to make the layer of adhesive generate tack at a certain temperature and then compounded with a bonded substrate under a certain pressure and in some time period. The thermal activation adhesion is the most common application mode for water-borne polyurethane adhesives. Most products of water-borne polyurethane dispersion are applicable for the configuration of thermal activation adhesives.

For the thermal activation adhesion, the crystallization rate of a polyurethane adhesive will directly affect the tack strength and the initial heat resistance. In general, a higher crystallization rate means greater tack strength and initial heat resistance as well as shorter time during which adhesion reaches the ultimate strength. In the other hand, the molecular weight will affect bond strength and heat resistance; the heavier the molecular weight is, the greater the bond strength and the ultimate heat resistance will be.

A great many factors will influence the crystallization rate of an polyurethane adhesive, such as the component crystallization rate of a polyester soft segment structure, the molecular weight distribution of polyester chain segments, components of an isocyanate structure, components of a polyester soft segment structure, the proportion of isocyanate and polyester chain segments, the compatibility of isocyanate and polyester chain segments, the type and the component content of a cross-linking agent and a chain extender, and ambient temperatures. These factors all exert a direct influence on how fast the crystallization rate of a polyurethane adhesive and how great the tack strength will be. Further, the test results of products of the same batch will be unlike in different places with different environments for testing, such as temperature and humidity.

For now, no testing device can be found in the current market to test the tack of an adhesive of water-borne polyurethane materials reliably because: testing data will vary in company with a change in environmental conditions; testing often relies on the "Gold Finger" experience of an individual tester in a company; and, even if test data obtained by a senior tester with great experience will not be repeated stably and reliably. Such a phenomenon of "uncertainty of testing" directly affects the efficiency and quality of the production with adhesives employed. Thus, the industry urgently demands a reliable and stable testing device with test data repeatable steadily. Meanwhile, the device can collect and accumulate test data of samples of products from the same batch or different batches in various regions with distinct temperature and humidity, which enables research personnel to rapidly and accurately find the optimal product most suitable for the local region by analyzing a relation between sample components and testing data, and also to rapidly and accurately find the reasons for disqualification. Such a testing device is a fast and high-efficient tool for product development and quality control.

### Summary

The present application is intended for addressing or, to some extent, relieving the problem contained in prior arts.

The testing device disclosed by the present application for testing adhesive tack can test the tack of an adhesive fast, repeatedly and accurately, which, to be specific, can test the tack of an adhesive repeatedly in different temperatures, pressures and cohesion times.

In one aspect, the present application puts forward a testing device for testing adhesive tack, which comprises:
a base;
a first mounting and clamping mechanism comprising a substrate clamp and a lifting unit, wherein the substrate clamp is fixed where the lifting unit is, which fixes and clamps a first substrate and can be lifted in a lengthwise direction along the base at a specified speed by the lifting unit;
a second mounting and clamping mechanism comprising a testing plate and a translating unit that are interconnected, the testing plate clamping and fixing a second substrate, which can be translated in a width direction orthogonal with the lengthwise direction by the translating unit, wherein the testing plate is provided with a plurality of testing points arranged widthwise and alternately in parallel, the second substrate forming, by the testing points, testing surfaces respectively bonded to the first substrate, and
wherein the first mounting and clamping mechanism further comprises: a pressure unit arranged on an upper portion of the substrate clamp, the pressure unit exerting a specified pressure when the testing surfaces of the first substrate and the second substrate are bonded to each other; and,
a testing mechanism connected with the substrate clamp and comprising a force sensor, the testing mechanism configured to detect an adhesion force between the first substrate and the second substrate when the first substrate departs from the second substrate due to an end to adhesion between the testing surfaces of them.

Optionally, the testing device according to any embodiment of the present application further comprises a temperature control mechanism configured to maintain and control a specified temperature of the testing device.

Optionally, the testing device according to any embodiment of the present application is characterized in: the temperature control mechanism comprises a shell enclosing the testing device, a temperature sensor and a temperature regulating element arranged within the shell, wherein the temperature regulating element regulates the temperature of the testing device under control.

Optionally, the testing device according to any embodiment of the present application is characterized in: the substrate clamp of the first mounting and clamping mechanism comprises:
an inner clamping sheet;
a outer clamping sheet,
wherein the inner clamping sheet and the outer clamping sheet fix the first substrate such that the first substrate is mounted and fixed in a U shape between the inner clamping sheet and the outer clamping sheet, and the first substrate faces the second mounting and clamping mechanism with a U-shaped bottom face; and,
an adjusting unit arranged where the outer clamping sheet is, the adjusting unit adjusting a clamping degree to which the inner clamping sheet and the outer clamping sheet clamp two support legs of the U shape.

Optionally, the testing device according to any embodiment of the present application is characterized in: the substrate clamp further comprises an elastic element, the elastic element arranged where the outer clamping sheet and exerting an elastic force onto the outer clamping sheet such that the first substrate overcomes the elastic force during installation and is maintained, after installation, in a U shape between the elastic element arranged where the outer clamping sheet.

Optionally, the testing device according to any embodiment of the present application is characterized in: the adjusting unit uses a threaded fastener to adjust the clamping degree between the inner clamping sheet and the outer clamping sheet.

Optionally, the testing device according to any embodiment of the present application is characterized in: the testing plate of the second clamping mechanism comprises an upper clamping plate and a lower clamping plate, between which the second substrate is fixed , wherein the upper clamping plate is provided with a plurality of testing points arranged widthwise and alternately in parallel.

Optionally, the testing device according to any embodiment of the present application is characterized in: the translating unit of the second clamping mechanism moves the testing plate widthwise by operating a rotary knob.

Optionally, the testing device according to any embodiment of the present application is characterized in: adjustment to a clamping degree between the upper clamping plate and the lower clamping plate is enabled by a threaded adjuster connecting and going through the upper clamping plate and the lower clamping plate.

Optionally, the testing device according to any embodiment of the present application is characterized in: the testing device further comprises a control unit, the control unit controlling the pressure exerted by the pressure unit when the testing surfaces of the first substrate and the second substrate are bonded to each other.

Optionally, the testing device according to any embodiment of the present application is characterized in: the control unit controls a speed at which the substrate clamp moves towards the second clamping mechanism.

Optionally, the testing device according to any embodiment of the present application is characterized in: the control unit controls and regulates the temperature of the testing device by controlling the temperature control mechanism.

Optionally, the testing device according to any embodiment of the present application is characterized in: the control unit controls and regulates time of duration of the pressure exerted by the pressure unit.

Optionally, the testing device according to any embodiment of the present application is characterized in: the testing plate, after the first substrate (38) departs from the testing surface of the second substrate, moves widthwise such that the other testing surfaces of the second substrate align with the first substrate lengthwise.

Optionally, the testing device according to any embodiment of the present application is characterized in: the control unit controls time when the substrate clamp starts moving and departing from the testing surface of the second substrate.

In another aspect, the present application puts forward a method for testing adhesive tack, which comprises:
setting a testing condition, wherein control is exerted over an environment condition of testing and testing parameters of testing the adhesive tack is set;
preparing a first substrate and a second substrate, which comprises applying the first substrate and/or the second substrate with an adhesive, and mounting and fixing the first substrate and the second substrate;
bonding the first substrate to the second substrate, wherein a pressure will be exerted onto the first substrate for a period when the first substrate is bonded to the second substrate;
separating the first substrate from the second substrate, wherein the first substrate is moved away from the second substrate and a force, which is exerted onto the first substrate when the first substrate is completely separated from the second substrate, is recorded as the adhesive tack;
maintaining the testing condition, replacing the first substrate and the second substrate, repeatedly testing times, and recording test results respectively; and,
processing data, wherein data processing is performed directed to the test results derived from times of testing in the same testing condition and the test result of tack is obtained.

Optionally, the method for testing adhesive tack according to any embodiment of the present application is characterized in: following testing parameters are included in the step for setting the testing parameters of testing the adhesive tack:
the pressure exerted onto the first substrate is 4.5 Kg; and,
time of duration of the pressure exerted onto the first substrate is 1.0 s.

Optionally, the method for testing adhesive tack according to any embodiment of the present application is characterized in: following testing parameters are included in the step for setting the testing parameters of testing the adhesive tack:
a speed at which the first substrate moves, during being bonded to the second substrate, towards the second substrate is 0.05 mm/s.

Optionally, the method for testing adhesive tack according to any embodiment of the present application is characterized in: in a step for controlling an environment condition of the test, a temperature of environment for the test is kept stable for each time of the test.

Optionally, the method for testing adhesive tack according to any embodiment of the present application is characterized in: during using the adhesive to bond the first substrate and the second substrate, the adhesive is applied onto the second substrate, or onto the first substrate and the second substrate.

Optionally, the method for testing adhesive tack according to any embodiment of the present application is characterized in: following testing parameters are included in the step for setting the testing parameters of testing the adhesive tack:
a time interval from the first substrate and/or the second substrate through processing being made ready to a start of the test.

Optionally, the method for testing adhesive tack according to any embodiment of the present application is characterized in: following testing parameters are included in the step for setting the testing parameters of testing the adhesive tack:
a speed at which the first substrate is separated from the second substrate.

Optionally, the method for testing adhesive tack according to any embodiment of the present application is characterized in: types of the first substrate and the second substrate are kept the same during replacing the first substrate and the second substrate.

Optionally, the method for testing adhesive tack according to any embodiment of the present application is characterized in: quantity of the adhesive applied is the same as to each time of the test during using the adhesive to apply the first substrate and/or the second substrate.

Optionally, the method for testing adhesive tack according to any embodiment of the present application is characterized in during mounting and fixing the first substrate and the second substrate, the second substrate is mounted such that the second substrate, during being tested repeatedly, forms new testing surfaces by movement and the first substrate replaced is tested with the new testing surfaces.

### Description of Figures

The disclosure of the present invention would be easy to understand by reference to the drawings. As is understood easily by one skilled in the art, these drawings are merely for illustrative purpose, and are not intended to limit the scope of the present invention. In the drawings:
Fig. 1 schematically illustrates a testing device for testing adhesive tack disclosed according to the present application;
Fig. 2 schematically illustrates the structure of a substrate clamp of a first mounting and clamping mechanism of the testing device disclosed according to the present application;
Fig. 3 schematically illustrates the structure of a second mounting and clamping mechanism of the testing device disclosed according to the present application;
Fig. 4 schematically illustrates a process of adhesive tack testing by a rubber bending method;
Fig. 5 schematically presents a comparison between test results obtained by two testers with a rubber bending method;
Fig. 6 schematically illustrates a process of adhesive tack testing by a hand feeling method;
Fig. 7 schematically illustrates a process of adhesive tack testing by a method with weight;
Fig. 8 schematically presents the test results derived from two different samples by using a method with weight;
Fig. 9 schematically presents the results of tack testing derived from different adhesives by using a method disclosed by the present application;
Fig. 10 schematically presents a comparison between tack derived from different substrates of synthetic leather by using a method disclosed by the present application;
Fig. 11 schematically presents a comparison between tack derived from different substrates of synthetic leather by using a method with weight;
Fig. 12 schematically presents an influence on tack from adhesive application times in testing by using a method disclosed by the present application;
Fig. 13 schematically illustrates an influence on adhesive tack with an adhesive applied unilaterally in testing by using a method disclosed by the present application;
Fig. 14 schematically illustrates an influence on adhesive tack with different pressures in testing by using a method disclosed by the present application;
Fig. 15 schematically presents an influence on adhesive tack from an extender in testing by using a method disclosed by the present application;
Fig. 16 schematically presents an influence on tack from different quantities of an employed adhesive in testing by using a method disclosed by the present application;
Fig. 17 schematically illustrates an influence on adhesive tack from different periods of pressure exertion in testing by using a method disclosed by the present application;

### Embodiments

Referring to Fig. 1, it schematically illustrates the structure of a testing device disclosed according to the present application. As can be seen from Fig. 1, the testing device for testing adhesive tack includes: a base (10) for supporting other structural components and being firmly fixed, a first mounting and clamping mechanism 30, a second mounting and clamping mechanism 40, and a testing mechanism for performing tack testing. To be specific, the first mounting and clamping mechanism 30 and the second mounting and clamping mechanism 40 are both connected with the base 10, wherein the second mounting and clamping mechanism 40 is arranged upon the base 10, and the testing mechanism is arranged upon the first mounting and clamping mechanism 30 for directly testing the adhesive tack. Referring to Fig. 1 further, the first mounting and clamping mechanism 30 comprises a substrate clamp and a lifting unit connected with the substrate clamp, wherein the substrate clamp can clamp and fix a first substrate, and can be lifted up and down along a lengthwise direction of the testing device by the lifting unit. To be specific, the substrate clamp moves towards a second substrate along the lengthwise direction of the testing device when the first substrate and second substrate are to be bonded (by an adhesive). After the bonding, the substrate clamp moves away from the second substrate along the lengthwise direction of the testing device. Likewise, a second mounting and clamping mechanism 40 comprises a testing plate and a translating unit, wherein the testing plate can clamp and fix the second substrate and can be translated in a widthwise direction orthogonal with the lengthwise direction by the translating unit, such that the substrate clamp with the first substrate clamped and fixed can be aligned with and bonded to the second substrate when moving towards the second base material. Moreover, the testing panel, is provided with a plurality of spaced testing points, facing the first substrate, arranged in parallel along the widthwise direction, wherein the second substrate forms, respectively by each of the testing points, corresponding testing surfaces such that the first substrate can be bonded to the corresponding testing surface during testing. After the bonding, the testing plate can be moved to a next testing surface not tested yet by the translating unit such that another first substrate can be successively bonded to another corresponding testing surface thereby to carry out the testing of adhesive tack. Here, the first mounting and clamping mechanism 30 will further exert a certain pressure to the testing surfaces of the first substrate contacting with the second substrate when bonding with the second substrate using the substrate clamp clamped and fixed with the substrate, and for this purpose, the first mounting and clamping mechanism 30 further comprises a pressure unit arranged on the substrate clamp along the lengthwise direction of the testing device, the pressure unit being able to controllably exert a specified pressure when the testing surfaces of the first substrate contacting with the second substrate are bonded to each other. The testing mechanism of the testing device disclosed by the present application may comprise a force sensor, by which the testing mechanism, arranged at the substrate clamp, can conveniently measure an adhesion force between the first substrate and the second substrate when the first substrate fixed and clamped at the substrate clamp departs from the second substrate after being bonded to a testing surface of the second substrate.

To keep the stability of temperature of the test environment during testing adhesive tack or, in other words, to rule out inaccuracy in test results of tack caused by temperature factors, the testing device disclosed by the present application preferably further comprises a temperature control mechanism 60. The temperature control mechanism 60 can maintain a specified temperature of the testing device when a test requires the exclusion of influence from temperature factors and can regulate the specified temperature of the testing device if tack needs to be tested under various temperatures. For the purpose, in some embodiments disclosed by the present application, the temperature control mechanism 60 may comprise a shell enclosing the testing device, a temperature sensor and a temperature regulating element (not shown in Fig. 1) arranged within the shell, wherein the temperature regulating element regulates the temperature of the testing device under control.

Referring to Fig. 2, it schematically illustrates the specific structure of the substrate clamp. As can be seen from Fig. 2, the substrate clamp comprises an inner clamping sheet 33, an outer clamping sheet 36 and an adjusting unit 34 arranged at the outer clamping sheet 36. As is schematically shown in Fig. 2, the first substrate 38 is mounted and clamped in a U shape between the inner clamping sheet 33 and the outer clamping sheet 36, and a U-shaped bottom face of the first substrate 38 faces the second mounting and clamping mechanism 40 or the second substrate. The adjusting unit 34 arranged at the outer clamping sheet can adjust, for example, by fastening or unfastening a threaded fastener or screwing it in or out in the direction of the outer clamping sheet 36, a clamping degree to which the inner clamping sheet 33 and the outer clamping sheet 36 clamp two support legs of the U shape or, in other words, can adjust a clamping degree of the first substrate 38.

To enable the first substrate 38 to be mounted at the substrate clamp easily, in some embodiments disclosed by the present application, the substrate clamp may further comprise an elastic element 37 arranged at the outer clamping sheet and being able to exert an elastic force onto the outer clamping sheet 36 such that a certain clamping between the outer clamping sheet 36 and the inner clamping sheet 33 is maintained. Due to the installation and operation mode of the elastic element 37, the first substrate 38 needs to overcome an elastic force exerted by the elastic element 37 during installation such that it can be mounted between the outer clamping sheet 36 and the inner clamping sheet 33; and, once the first substrate 38 is mounted at the substrate clamp, the elastic force from the elastic element 37 will make the substrate 38 kept in a U shape between the inner clamping sheet 33 and the outer clamping sheet 36 with a certain clamping degree.

Referring to Fig. 3, it schematically illustrates the structure of a part of the testing plate along with the translating unit disclosed by the present application. As can be seen from Fig. 3, the testing plate of the second mounting and clamping mechanism 40 may comprise an upper clamping board 41 and a lower clamping board 42, between which the second substrate 47 is fixed and clamped. Here, the upper clamping board 41 is provided with a plurality of spaced testing points arranged widthwise and in parallel, e.g., testing points in the forms of grooves or recesses. After the second substrate 47 is mounted between the upper clamping board 41 and the lower clamping board 42, testing surfaces can be formed by these testing points bonded respectively to the first substrate 38.

Here, optionally, the clamping degree between the upper clamping board 41 and the lower clamping board 42 is adjustable, for example, by providing with at least one threaded adjuster 46, which can pass through the upper clamping board 41 and the lower clamping board 42 and can be screwed in or out to adjust the clamping degree of the second substrate 47 between the upper clamping board 41 and the lower clamping board 42.

Additionally, as can be seen from Fig. 3, a rotary knob 44, for example, is set in connection with the testing plate. The rotary knob 44 can enable by its rotation the translation of the testing plate widthwise. Certainly, operating elements of the translating unit can be enabled by other means as well.

To enable automatic and repeated testing of adhesive tack, the testing device disclosed by the present application is further provided with a control unit, wherein the control unit can be operated to control, for example, the temperature of the testing device or the pressure exerted by the pressure unit. To be specific, for various testing purposes of adhesive tack tests, the control unit can exert different control over the testing device. For example, for some testing purposes, the control unit needs to control the pressure unit to exert an identical pressure , with the same duration of pressure exertion and/or the same speed at which the first substrate 38 moves (more exactly, descends) towards each testing surface of the second substrate, when the first substrate 38 is bonded to each testing surface of the second substrate 47. Certainly, for various testing purposes of adhesive tack tests, the control unit may also be configured to exert different control in other testing conditions to realize desired repeatability and result accuracy of a test. According to the testing device in any embodiment of the present application, it may also be considered that the control unit controls the timing when the substrate clamp starts moving and departing from the testing surface of the second substrate 47.

Meanwhile, the present application further discloses a method of testing adhesive tack. Before a specific introduction of the testing method disclosed by the present application, some conventional testing methods in the art will be introduced briefly as follows:

### 1. Rubber Bending Method

Fig. 4 illustrates testing of adhesive tack by rubber bending. At one end of a rubber sample bar with a dimension of 20mm×100mm, an adhesive is applied at the point of 20mm×35mm; after drying and activation of the adhesive, the rubber bar is bent by hand with an invariable force to make the adhesive-applied end contact and fit the other end without the adhesive applied. The sample bar will bend while the tension of rubber itself will tend to open it; after a period of time, e.g., 20 minutes, the distance of opening will be measured, and a smaller distance indicates a greater tack. If the tack is poor, the sample bar will open very fast. Fig. 5 presents a comparison between test results obtained by two different testers, respectively.

As is described above, the testing method of rubber bending has the following detects due to its operation:
the testing is based on adhesion between rubber and rubber, which cannot simulate the adhesion between rubber and leather in the practice;
pressure is exerted by hand when adhesion, which cannot ensure that the same force is exerted every time;
different testers might obtain distinct test results; and,
influence from temperature and humidity in the test environment will be considerable.

### 2. Hand Feeling Method

As is illustrated in Fig. 6, when a testing is carried out with the hand feeling of a tester, an adhesive is applied on a point of 20mm×80mm at one end of a rubber sample bar with a dimension of 20mm×100mm; after drying and activation of the adhesive, a piece of PU synthetic leather processed by a cleaning agent with the same size is slightly bonded to the point of the rubber by hand with an invariable force; after that, they are separated immediately by hand, and the tack can be determined by the force felt when these two pieces of substrates separate. If the adhesive tack is good, a certain force will be required to separate them; on the contrary, no force will be needed or felt when they separate if the adhesive tack is poor.

Apparently, it is concluded that the hand feeling method is enormously dependent upon the subjective feeling of different testers; thus, the method has the following defects:
exerting pressure by hand during adhesion cannot ensure that the same force is exerted every time, the testing depends upon subjective feeling, and the test results will vary with each individual;
a subtle difference between samples might not be recognized by subjective feeling; and,
influence from temperature and humidity of test environment will be considerable.

### 3. Method with Weight

Fig. 7 schematically illustrates a method for testing adhesive tack with weight. That is, an adhesive is applied on a point of 20mm×80mm at one end of a rubber sample bar with a dimension of 20mm×100mm; after drying and activation of the adhesive, a piece of PU synthetic leather processed by a cleaning agent with the same size is slightly bonded to the point of the rubber, and, two ends of the sample bar are pressed to fit each other with e.g., a rubber roller of 4.5Kg. Subsequently, a weight of 1.0Kg is added onto the sample bar immediately after the pressing. The sample bar tends to open due to the weight; after a period of time, e.g., 20 minutes, the distance of opening will be measured, and a smaller distance indicates greater tack. If the tack is poor, the sample bar will open very fast, for example, with the distance of 80mm in such a condition. Fig. 8 presents the test results derived from two different samples, respectively.

Known from the test results shown in Figs. 7 and 8, the method with weight has the following disadvantages:
when a difference between samples is subtle, the difference cannot be recognized from a test result ;
the concrete scope of difference between a sample and a target cannot be determined when the sample is poor;
influence from temperature and humidity of test environment will be considerable.

Based on aforesaid known testing methods, the present application puts forward a method for testing adhesive tack that can ameliorate or, to some extent, relieve the advantages of aforesaid methods, the method of the present application comprising the following steps:
setting a testing condition, controlling the environment condition of testing and setting testing parameters for the adhesive tack testing;
preparing a first substrate and a second substrate, which comprises applying the first substrate and/or the second substrate with an adhesive, and mounting and fixing the first substrate and the second substrate;
bonding the first substrate and the second substrate, wherein a pressure will be exerted onto the first substrate for a period when the first substrate is bonded to the second substrate;
separating the first substrate from the second substrate, wherein the first substrate is moved away from the second substrate and a force, which is exerted onto the first substrate when the first substrate is completely separated from the second substrate, is recorded as the adhesive tack;
maintaining the testing condition, replacing the first substrate and the second substrate, repeatedly testing times, and recording test results respectively; and,
processing data, wherein data processing is performed based on the test results derived from times of testing in the same testing condition and the test result of tack is obtained.

As shall be noted here, the first substrate and the second substrate are intended only for discriminating different materials, rather than serving the purpose of limitation; thus, they shall not be understood restrictively.

During the setting of testing conditions, in one aspect, environmental conditions for testing are controlled; for example, regarding times of testing that a tack result is obtained per time, the temperature of the testing environment is required to be stable; in another aspect, regarding test parameters in times of testing that a tack result is obtained per time, the pressure exerted onto the first substrate, the duration of exerting the pressure onto the first substrate, the speed at which the first substrate moves towards the second substrate to adhere to the second substrate and the speed at which the first substrate departs from the second substrate shall be kept invariable. That means, regarding times of testing that a tack result is obtained per time, one shall ensure the repeatability in the testing dynamic process such that the accuracy of test results would be guaranteed.

Moreover, for times of testing that a tack result is obtained per time, in some embodiments disclosed by the present application, an adhesive is uniformly applied onto the second substrate or onto the second substrate and the first substrate during using the adhesive to bond the first substrate to the second substrate. Meanwhile, the quantity of adhesive applied could be the same such that deviations of tack results caused by adhesive quantity will be ruled out.

And meanwhile, to rule out influence on testing results of adhesive tack from different materials, types of the first substrate and the second substrate will be kept the same during replacing the first substrate and the second substrate.

Moreover, to exclude influence on testing results of adhesive tack from different activation time, it will be specified in the methods involved that, by setting the testing conditions, a time interval from the first substrate and/or the second substrate through processing being ready to the start of the test shall be set the same.

Preferably, as the testing device disclosed by the present application is, during mounting and fixing the first substrate and the second substrate, the second substrate is mounted such that the second substrate, during being tested repeatedly, forms new testing surfaces by translation and the first substrate replaced is tested with the new testing surfaces. As such, the time of detaching and replacing the second substrate is saved so as to save the time and ease the workload required by testing.

### Examples

Examples will be taken to further schematically illustrate the testing device and the method for testing adhesive tack concerned in the present application as follows:

### Example 1: Tack Comparison between Different Adhesives

Black rubber (hereinafter "second substrate") with a size of 40mm×90mm, polished, cleaned and processed by 2% TCI ethyl acetate solution, are respectively applied with different thermal activation polyurethane adhesive samples, PUD-1, PUD-2, PUD-3, PUD-4 and PUD-5, with a quantity of about 0.40g; subsequently, the black rubber will be dried and activated in an oven. PU synthetic leather (hereinafter "first substrate") is cut into a 20mm×100mm piece, and is processed by a treating agent of synthetic leather and dried for three minutes at 60°C in an oven. The two pieces of substrate are taken out from the oven; the black rubber is secured on the second mounting and clamping mechanism 40 of the base while the synthetic leather is fixed at the first mounting and clamping mechanism 30 that is movable up and down; after that, testing is started. Parameters of the testing are set as: exerted pressure of 4.5Kg, exertion time of 1.0 sec, and test speed of 0.05 mm/sec. As the first mounting and clamping mechanism 30 moves downwards, the PU synthetic leather contacts an surface with adhesive; upon the exertion of a certain pressure, the first mounting and clamping mechanism 30 moves upwards, and the PU synthetic leather is separated from the surface with adhesive. The force magnitude at the time the first substrate 38 is completely separated from the second substrate 47 will be recorded by a sensor, the value of which will be employed to measure the adhesive tack. A greater value means that the adhesive tack is greater. After the value is recorded, the first substrate is replaced on the first mounting and clamping mechanism 30, and the second mounting and clamping mechanism 40 is widthwise movable to form a new testing surface such that the replaced first substrate and the new testing surface can be used for repeated test. Please see Table 1 and Fig. 9 for the test results.

**Table 1: Tack Comparison between Different Adhesives**

| substrate | | | substrate | | Tack: g ( Testing Each Sample Five Times ) | | | | |
|---|---|---|---|---|---|---|---|---|---|
| substrate 1 | Primer of substrate1 | Adhesive | substrate2 | Primer of substrate2 | 1 | 2 | 3 | 4 | 5 |
| Black Rubber | 2% TCI Ethyl Acetate Solution | PUD-1 | L-35 | Synthetic Leather Primer | 3056 | 2946 | 2869 | 2881 | 2959 |
| Black Rubber | 2% TCI Ethyl Acetate Solution | PUD-2 | L-35 | Synthetic Leather Primer | 1194 | 1153 | 1322 | 1137 | 1300 |
| Black Rubber | 2% TCI Ethyl Acetate Solution | PUD-3 | L-35 | Synthetic Leather Primer | 2306 | 2182 | 2166 | 2154 | 2250 |
| Black Rubber | 2% TCI Ethyl Acetate Solution | PUD-4 | L-35 | Synthetic Leather Primer | 1710 | 1828 | 1634 | 1721 | 1849 |
| Black Rubber | 2% TCI Ethyl Acetate Solution | PUD-5 | L-35 | Synthetic Leather Primer | 3268 | 3191 | 3169 | 3387 | 3297 |

### Example 2: Adhesive Tack Comparison on Different First substrates

Black rubber with a size 40mm×90mm, polished, cleaned and processed by 2% TCI ethyl acetate solution, is applied with the thermal activation polyurethane adhesive PUD-1 with a quantity of about 0.40g; subsequently, the black rubber will be dried and activated in an oven. Different types of PU synthetic leather are cut into 20mm×100mm pieces, and are processed by a treating agent of synthetic leather and dried for three minutes at 60°C in an oven. The two pieces of substrates are taken out from the oven; the black rubber is secured on the second mounting and clamping mechanism 40 of the base while the synthetic leather is fixed at the first mounting and clamping mechanism 30 that is movable up and down; after that, testing is started. Parameters of the testing are set as: exerted pressure of 4.5Kg, exertion time of 1.0 sec, test speed of 0.05 mm/sec. Fig. 2 and Figs. 10-11 present test results from a testing method disclosed by the present application and the testing method with weight (roll-in method: 4.5Kg pressure, 1sec time, 1Kg weight).

**Table 2: Adhesive Tack Comparison on Different First substrate**

| substrate 1 | | | substrate 2 | | Tack: g - Method of Present Application ( Testing Each Sample Three Times ) | | | Open Distance (mm) - Method with Weight (Testing Each Sample Two Times) | |
|---|---|---|---|---|---|---|---|---|---|
| Name | Primer | Adhesive | Name | Primer | 1 | 2 | 3 | 1 | 2 |
| Black Rubber | 2% TCI Ethyl Acetate Solution | PUD-1 | L-07 | Synthetic Leather Primer | 2076 | 2007 | 2262 | 3 | 4 |
| Black Rubber | 2% TCI Ethyl Acetate Solution | PUD-1 | L-35 | Synthetic Leather Primer | 1498 | 1455 | 1503 | 80 | 80 |
| Black Rubber | 2% TCI Ethyl Acetate Solution | PUD-1 | L-37 | Synthetic Leather Primer | 2707 | 2830 | 2697 | 3 | 4 |
| Black Rubber | 2% TCI Ethyl Acetate Solution | PUD-1 | L-39 | Synthetic Leather Primer | 1258 | 1304 | 1049 | 80 | 80 |
| Black Rubber | 2% TCI Ethyl Acetate Solution | PUD-1 | L-42 | Synthetic Leather Primer | 1327 | 1477 | 1301 | 80 | 80 |
| Black Rubber | 2% TCI Ethyl Acetate Solution | PUD-1 | L-43 | Synthetic Leather Primer | 1599 | 1673 | 1633 | 80 | 80 |
| Black Rubber | 2% TCI Ethyl Acetate Solution | PUD-1 | L-45 | Synthetic Leather Primer | 2524 | 2460 | 2390 | 5 | 6 |

### Example 3: Influence on Tack from Different Times of Adhesive Application

Black rubber with a size 40mm×90mm, polished, cleaned and processed by 2% TCI ethyl acetate solution is applied with the thermal activation polyurethane adhesive PUD-1 with a quantity of about 0.40g, by a one-layer applying process and a two-layer applying process, respectively; subsequently, the black rubber will be dried and activated in an oven. Synthetic leather is cut into a 20mm× 100mm piece, and is processed by a treating agent of synthetic leather and dried for three minutes at 60°C in an oven. The two pieces of substrates are taken out from the oven; the black rubber is secured on the second mounting and clamping mechanism 40 of the base while the synthetic leather is fixed at the first mounting and clamping mechanism 30 that is movable up and down; after that, testing is started. Parameters of the testing are set as: exerted pressure of 4.5Kg, exertion time of 1.0 sec, test speed of 0.05 mm/sec. Please see Table 3 and Fig. 12 for the test results.

**Table 3: Influence on Tack from Different Times of Adhesive Application**

| Number of Adhesive Layer | substrate1 | | | substrate2 | | Tack: g ( Testing Each Sample Three Times ) | | |
|---|---|---|---|---|---|---|---|---|
| | Name | Primer | Adhesive | Name | Primer | 1 | 2 | 3 |
| One Adhesive Layer | Black Rubber | 2% TCI Ethyl Acetate Solution | PUD-1 | L-35 | Synthetic Leather Primer | 1311 | 1447 | 1378 |
| Two Adhesive Layer | Black Rubber | 2% TCI Ethyl Acetate Solution | PUD-1 | L-35 | Synthetic Leather Primer | 1498 | 1455 | 1503 |
| One Adhesive Layer | Black Rubber | 2% TCI Ethyl Acetate Solution | PUD-1 | L-45 | Synthetic Leather Primer | 1920 | 1843 | 1730 |
| Two Adhesive Layer | Black Rubber | 2% TCI Ethyl Acetate Solution | PUD-1 | L-45 | Synthetic Leather Primer | 2524 | 2460 | 2390 |

### Example 4: Influence on Tack of Unilaterally-Applied Adhesive from Different Pressures

Black rubber with a size 40mm×90mm, polished, cleaned and processed by 2% TCI ethyl acetate solution is applied with a self-made thermal activation polyurethane adhesive of PUD-1 with a quantity of about 0.40g; subsequently, the black rubber will be dried and activated in an oven. Synthetic leather is cut into a 20mm×100mm piece, and is processed by a treating agent of synthetic leather and dried for three minutes at 60°C in an oven. The two pieces of substrates are taken out from the oven; the black rubber is secured on the second mounting and clamping mechanism 40 of the base while the synthetic leather is fixed at the first mounting and clamping mechanism 30 that is movable up and down; after that, testing is started. Parameters of the testing are set as: the pressures of 4.5Kg, 6.0Kg and 13.5Kg are respectively exerted; the exertion time is 1.0 sec; and, the test speed is 0.05 mm/sec. Please see Table 4 and Fig. 13 for the test results.

**Table 4: Influence on Tack of Unilaterally-Applied Adhesive from Different Pressures**

| Exerted Pressure | substrate1 | | | substrate2 | | Tack: g ( Testing Each Sample Three Times ) | | |
|---|---|---|---|---|---|---|---|---|
| | Name | Primer | Adhesive | Name | Primer | 1 | 2 | 3 |
| 4.5Kg | Black Rubber | 2% TCI Ethyl Acetate Solution | PUD-1 | L-35 | Synthetic Leather Primer | 1498 | 1455 | 1503 |
| 6.0Kg | Black Rubber | 2% TCI Ethyl Acetate Solution | PUD-1 | L-35 | Synthetic Leather Primer | 1883 | 1626 | 1907 |
| 9.0Kg | Black Rubber | 2% TCI Ethyl Acetate Solution | PUD-1 | L-35 | Synthetic Leather Primer | 2696 | 2604 | 2754 |
| 13.5Kg | Black Rubber | 2% TCI Ethyl Acetate Solution | PUD-1 | L-35 | Synthetic Leather Primer | 2993 | 3013 | 3321 |

### Example 5: Influence on Tack of Bilaterally-Applied Adhesive from Different Pressures

Black rubber with a size 40mm×90mm, polished, cleaned and processed by 2% TCI ethyl acetate solution is applied with a self-made thermal activation polyurethane adhesive of PUD-2 with a quantity of about 0.40g; subsequently, the black rubber will be dried and activated in an oven. Synthetic leather is cut into a 20mm×100mm piece, and is processed by a treating agent of synthetic leather and dried for three minutes at 60°C in an oven, and subsequently, is applied with PUD-2 with a quantity of about 0.20g. The two pieces of substrates are taken out from the oven; the black rubber is secured on the second mounting and clamping mechanism 40 of a base while the synthetic leather is fixed at the first mounting and clamping mechanism 30 that is movable up and down; after that, testing is started. Parameters of the testing are set as: the pressures of 100g, 500g, 1000g, 5000g, 7500g, 10000g and 20000g are respectively exerted; the exertion time is 1.0 sec; and, the test speed is 0.05 mm/sec. Please see Table 5 and Fig. 14 for the test results.

**Table 5: Influence on Tack of Bilaterally-Applied Adhesive from Different Pressures**

| Exerted Pressure | substrate 1 | | | substrate2 | | Tack: g ( Testing Each Sample Five Times ) | | | | |
|---|---|---|---|---|---|---|---|---|---|---|
| | Name | Primer of substrate 1 | Adhesive | Name | Primer of substrate2 | 1 | 2 | 3 | 4 | 5 |
| 100g | Black Rubber | 2% TCI Acetate Solution | PUD-2 | L-30 T | Synthetic Leather Primer | 878 | 910 | 873 | 859 | 849 |
| 500g | Black Rubber | 2% TCI Acetate Solution | PUD-2 | L-30 T | Synthetic Leather Primer | 3687 | 3369 | 3492 | 3462 | 3520 |
| 1000g | Black Rubber | 2% TCI Acetate Solution | PUD-2 | L-30 T | Synthetic Leather Primer | 5108 | 5407 | 5254 | 4968 | 5088 |
| 5000g | Black Rubber | 2% TCI Ethyl Acetate Solution | PUD-2 | L-30 T | Synthetic Leather Primer | 1007 4 | 9699 | 10068 | 1045 0 | 9890 |
| 7500g | Black Rubber | 2% TCI Ethyl Acetate Solution | PUD-2 | L-30 T | Synthetic Leather Primer | 1123 2 | 1160 5 | 11689 | 1142 1 | 10988 |
| 10000g | Black Rubber | 2% TCI Ethyl Acetate Solution | PUD-2 | L-30 T | Synthetic Leather Primer | 1172 0 | 1247 6 | 12221 | 1113 5 | 11680 |
| 20000g | Black Rubber | 2% TCI Ethyl Acetate Solution | PUD-2 | L-30 T | Synthetic Leather Primer | 1089 3 | 1202 0 | 11228 | 1117 0 | 11318 |

### Example 6: Influence on Adhesive Tack from Extender

Black rubber with a size 40mm×90mm, polished, cleaned and processed by 2% ethyl acetate solution is applied with a self-made thermal activation polyurethane adhesive of PUD-1 with a quantity of about 0.40g; and subsequently, the black rubber will be dried and activated in an oven. Synthetic leather is cut into a 20mm×100mm piece, and is processed by a treating agent of synthetic leather and dried for three minutes at 60°C in an oven. The two pieces of substrates are taken out from the oven; the black rubber is secured on the second mounting and clamping mechanism 40 of a base while the synthetic leather is fixed at the first mounting and clamping mechanism 30 that is movable up and down; after that, testing is started. Parameters of the testing are set as: exerted pressure of 4.5Kg, exertion time of 1.0 sec, and test speed of 0.05 mm/sec. Please see Table 6 and Fig. 15 for the test results.

**Table 6: Influence on Adhesive Tack from Extender**

| substrate1 | | | substrate 2 | | Tack: g( Testing Each Sample Three Times ) | | |
|---|---|---|---|---|---|---|---|
| Name | Primer | Adhesive | Name | Primer | 1 | 2 | 3 |
| Black Rubber | 2% TCI Ethyl Acetate Solution | PUD-1 without Extender | L-35 | Synthetic Leather Primer | 2653 | 2596 | 2863 |
| Black Rubber | 2% TCI Ethyl Acetate Solution | PUD-1 with Extender | L-35 | Synthetic Leather Primer | 3575 | 3492 | 3878 |

### Example 7: Influence on Tack from Different Adhesive Quantities

Black rubber with a size 40mm×90mm, polished, cleaned and processed by 2% TCI ethyl acetate solution is applied with self-made thermal activation polyurethane adhesives of PUD-1 and PUD-5, respectively, with quantities of about 0.40g and about 0.5g, respectively; and subsequently, the black rubber will be dried and activated in an oven. Synthetic leather is cut into a 20mm×100mm piece, and is processed by a treating agent of synthetic leather and dried for three minutes at 60°C in an oven. The two pieces of base materials are taken out from the oven; the black rubber is secured on the second mounting and clamping mechanism 40 of the base while the synthetic leather is fixed at the first mounting and clamping mechanism 30 that is movable up and down; after that, testing is started. Parameters of the testing are set as: exerted pressure of 4.5Kg, exertion time of 1.0 sec, and test speed of 0.05 mm/sec. Please see Table 7 and Fig. 16 for the test results.

**Table 7: Influence on Tack from Different Adhesive Quantities**

| Quantity of Adhesive | substrate 1 | | | substrate 2 | | Tack: g ( Testing Each Sample Three Times ) | | | | |
|---|---|---|---|---|---|---|---|---|---|---|
| | Name | Primer | Adhesive | Name | Primer | 1 | 2 | 3 | 4 | 5 |
| 0.40g | Black Rubber | 2% TCI Ethyl Acetate Solution | PUD-1 | L-45 | Synthetic Leather Primer | 3433 | 3266 | 3400 | 3271 | 3230 |
| 0.50g | Black Rubber | 2% TCI Ethyl Acetate Solution | PUD-1 | L-45 | Synthetic Leather Primer | 3940 | 4180 | 4105 | 4192 | 4150 |
| 0.40g | Black Rubber | 2% TCI Ethyl Acetate Solution | PUD-5 | L-45 | Synthetic Leather Primer | 3214 | 3197 | 3329 | 3143 | 3287 |
| 0.50g | Black Rubber | 2% TCI Ethyl Acetate Solution | PUD-5 | L-45 | Synthetic Leather Primer | 3936 | 3942 | 4010 | 4203 | 4037 |

### Example 8: Influence on Tack from Different Pressure Exertion Times

Black rubber with a size 40mm×90mm, polished, cleaned and processed by 2% TCI ethyl acetate solution is applied with a self-made thermal activation polyurethane adhesive of PUD-2 with a quantity of about 0.40g; and subsequently, the black rubber will be dried and activated in an oven. Synthetic leather is cut into a 20mm×100mm piece, and is processed by a treating agent of synthetic leather and dried for three minutes at 60°C in an oven. The two pieces of substrates are taken out from the oven; the black rubber is secured on the second mounting and clamping mechanism 40 of the base while the synthetic leather is fixed at the first mounting and clamping mechanism 30 that is movable up and down; after that, testing is started. Parameters of the testing are set as: the exerted pressure is 4.5Kg; the exertion times are 1sec, 2sec, 3sec, 20sec, 30sec and 60sec, respectively; and, the test speed is 0.05 mm/sec. Please see Table 8 and Fig. 17 for the test results.

**Table 8: Influence on Tack from Different Pressure Exertion Times**

| Time of Pressure Exertion | substrate 1 | | | substrate 2 | | Tack: g( Testing Each Sample Three Times ) | | | | |
|---|---|---|---|---|---|---|---|---|---|---|
| | Name | Primer | Adhesive | Name | Primer | 1 | 2 | 3 | 4 | 5 |
| 1.0 | Black Rubber | 2% TCI Ethyl Acetate Solution | PUD-2 | L-30T | Synthetic Leather Primer | 3597 | 314 4 | 3380 | 3110 | 3400 |
| 2.0 | Black Rubber | 2% TCI Acetate Solution | PUD-2 | L-30T | Synthetic Leather Primer | 3917 | 385 5 | 3629 | 3689 | 3467 |
| 3.0 | Black Rubber | 2% TCI Ethyl Acetate Solution | PUD-2 | L-30T | Synthetic Leather Primer | 4009 | 3908 | 3923 | 4032 | 4024 |
| 20.0 | Black Rubber | 2% TCI Ethyl Acetate Solution | PUD-2 | L-30T | Synthetic Leather Primer | 5041 | 529 3 | 5030 | 5206 | 4831 |
| 30.0 | Black Rubber | 2% TCI Acetate Solution | PUD-2 | L-30T | Synthetic Leather Primer | 6023 | 621 8 | 5786 | 5648 | 5826 |
| 60.0 | Black Rubber | 2% TCI Acetate Solution | PUD-2 | L-30T | Synthetic Leather Primer | 6400 | 622 3 | 6296 | 6192 | 6592 |

## Claims

1. A testing device for testing adhesive tack, comprising:
a base (10);
a first mounting and clamping mechanism (30) comprising a substrates clamp and a lifting unit, wherein the substrates clamp is fixed where the lifting unit is, which fixes and clamps a first substrates (38) and can be lifted in a lengthwise direction along the base (10) at a specified speed by the lifting unit;
a second mounting and clamping mechanism (40) comprising a testing panel and a translating unit that are interconnected, the testing panel clamping and fixing a second substrates (47), which can be translated in a width direction orthogonal with the lengthwise direction by the translating unit, wherein the testing panel is provided with a plurality of testing points arranged widthwise and alternately in parallel, the second substrates (47) forming, by the testing points, testing surfaces respectively adhered to the first substrates (38), and wherein the first mounting and clamping mechanism (30) further comprises: a pressure unit arranged on an upper portion of the substrates clamp, the pressure unit exerting a specified pressure when the testing surfaces of the first substrates (38) and the second substrates (47) are adhered to each other; and,
a testing mechanism connected with the base material clamp and comprising a force sensor, the testing mechanism configured to detect an adhesion force between the first substrates (38) and the second substrates (47) when the first substrates material (38) departs from the second substrates (47) due to an end to adhesion between the testing surfaces of them.

2. The testing device according to claim 1, wherein the testing device further comprises a temperature control mechanism (60), the temperature control mechanism (60) configured to maintain and control a temperature of the testing device.

3. The testing device according to claim 2, wherein the temperature control mechanism (60) comprises a shell enclosing the testing device, a temperature sensor and a temperature regulating element arranged within the shell, wherein the temperature regulating element regulates the temperature of the testing device under control.

4. The testing device according to claim 1, wherein the substrate clamp of the first mounting and clamping mechanism (30) further comprises:
an inner clamping sheet (33);
an outer material clamping sheet (36),
wherein the inner clamping sheet (33) and the outer clamping sheet (36) fix the first substrate (38) such that the first substrate (38) is mounted and fixed in a U shape between the inner clamping sheet (33) and the outer clamping sheet (36), and the first substrate (38) faces the second mounting and clamping mechanism (40) with a U-shaped bottom face; and,
an adjusting unit (34) arranged where the outer clamping sheet (36) is, the adjusting unit (34) adjusting a clamping degree to which the inner clamping sheet (33) and the outer clamping sheet (36) clamp two support legs of the U shape.

5. The testing device according to claim 4, wherein the substrate clamp further comprises an elastic element (37), the elastic element (37) arranged where the outer clamping sheet (36) and exerting an elastic force onto the outer clamping sheet (36) such that the first substrate (38) overcomes the elastic force during installation and is maintained, after installation, in a U shape between the elastic element (37) arranged where the outer clamping sheet (36).

6. The testing device according to claim 4, wherein the adjusting unit (34) uses a threaded fastener to adjust the clamping degree between the inner clamping sheet (33) and the outer clamping sheet (36).

7. The testing device according to claim 1, wherein the testing panel of the second clamping mechanism (40) comprises an upper clamping plate (41) and a lower clamping plate (42), between which the second substrate (47) is fixed , wherein the upper clamping plate (41) is provided with a plurality of testing points arranged widthwise and alternately in parallel.

8. The testing device according to claim 1, wherein the translating unit of the second clamping mechanism (40) moves the testing panel widthwise by operating a rotary knob (44).

9. The testing device according to claim 7, wherein adjustment to a clamping degree between the upper clamping plate (41) and the lower clamping plate (42) is enabled by a threaded adjuster (46) connecting and going through the upper clamping plate (41) and the lower clamping plate (42).

10. The testing device according to claim 2, wherein the testing device further comprises a control unit, the control unit controlling the pressure exerted by the pressure unit when the testing surfaces of the first substrate (38) and the second substrate (47) are adhered to each other.

11. The testing device according to claim 10, wherein the control unit control a speed at which the substrate clamp moves towards the second clamping mechanism (40).

12. The testing device according to claim 10, wherein the control unit controls and regulates the temperature of the testing device by controlling the temperature control mechanism (60).

13. The testing device according to claim 10, wherein the control unit controls and regulates time of duration of the pressure exerted by the pressure unit.

14. The testing device according to claim 10, wherein the control unit controls time when the substrate clamp starts moving and departing from the testing surface of the second substrate (47).

15. The testing device according to claim 1, wherein the testing panel, after the first substrate (38) departs from the testing surface of the second substrate (47), moves widthwise such that the other testing surfaces of the second substrate (47) align with the first substrate (38) lengthwise.

16. A method of testing adhesive tack, comprising:
setting a testing condition, wherein control is exerted over an environment condition of testing and testing parameters of testing the adhesive tack is set;
preparing a first substrate and a second substrate, which comprises applying the first substrate and/or the second substrate with an adhesive, and mounting and fixing the first substrate and the second substrate;
adhering the first substrate and the second substrate, wherein a pressure will be exerted onto the first substrate for a period when the first substrate is adhered to the second substrate;
separating the first substrate from the second substrate, wherein the first substrate is moved away from the second substrate and a force, which is exerted onto the first substrate when the first substrate is completely separated from the second substrate, is recorded as the adhesive tack;
maintaining the testing condition, replacing the first substrate and the second substrate, repeatedly testing times, and recording test results respectively; and,
processing data, wherein data processing is performed directed to the test results derived from times of testing in the same testing condition and the test result of tack is obtained.

17. The method of testing adhesive tack according to claim 16, wherein following testing parameters are included in a step for setting the testing parameters of testing the adhesive tack:
the pressure exerted onto the first substrate is 4.5 kg; and,
time of duration of the pressure exerted onto the first substrate is 1.0 s.

18. The method of testing adhesive tack according to claim 17, wherein following testing parameters are included in the step for setting the testing parameters of testing the adhesive tack:
a speed at which the first substrate moves, during being adhered to the second substrate, towards the second substrate is 0.05 mm/s.

19. The method of testing adhesive tack according to claim 16, wherein, in a step for controlling an environment condition of the test, a temperature of environment for the test is kept stable for each time of the test.

20. The method of testing adhesive tack according to claim 16, wherein, during using the adhesive to adhere the first substrate and the second substrate, the adhesive is applied onto the second substrate, or onto the first substrate and the second substrate.

21. The method of testing adhesive tack according to claim 20, wherein following testing parameters are included in the step for setting the testing parameters of testing the adhesive tack:
a time interval from the first substrate and/or the second substrate through processing being made ready to a start of the test.

22. The method of testing adhesive tack according to claim 16, wherein following testing parameters are included in the step for setting the testing parameters of testing the adhesive tack:
a speed at which the first substrate is separated from the second substrate.

23. The method of testing adhesive tack according to claim 16, wherein types of the first substrate and the second substrate are kept the same during replacing the first substrate and the second substrate.

24. The method of testing adhesive tack according to claim 16, wherein quantity of the adhesive applied is the same as to each time of the test during using the adhesive to apply the first substrate and/or the second substrate.

25. The method of testing adhesive tack according to claim 16, wherein, during mounting and fixing the first substrate and the second substrate, the second substrate is mounted such that the second substrate, during being tested repeatedly, forms new testing surfaces by movement and the first substrate replaced is tested with the new testing surfaces.
